(19) Europäisches Patentamt
European Patent Office
Office européen des brevets

(11) **EP 3 162 264 A1**

(12) **EUROPEAN PATENT APPLICATION**
published in accordance with Art. 153(4) EPC

(43) Date of publication:
**03.05.2017 Bulletin 2017/18**

(51) Int Cl.:
*A47L 9/28* (2006.01)    *G05D 1/02* (2006.01)
*B25J 9/16* (2006.01)

(21) Application number: **15812210.1**

(22) Date of filing: **30.03.2015**

(86) International application number:
**PCT/KR2015/003108**

(87) International publication number:
**WO 2015/199316 (30.12.2015 Gazette 2015/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **26.06.2014 KR 20140078589**

(71) Applicant: **Samsung Electronics Co., Ltd.**
**Suwon-si, Gyeonggi-do 443-742 (KR)**

(72) Inventors:
• **KWAK, No San**
**Suwon-si**
**Gyeonggi-do 442-703 (KR)**
• **KIM, Ji Min**
**Yongin-si**
**Gyeonggi-do 448-785 (KR)**
• **KIM, Shin**
**Hwaseong-si**
**Gyeonggi-do 445-790 (KR)**
• **ROH, Kyung Shik**
**Seongnam-si**
**Gyeonggi-do 463-772 (KR)**
• **YOON, Suk June**
**Seoul 139-924 (KR)**
• **SONG, Jeong Gon**
**Gwangju 506-772 (KR)**

(74) Representative: **D'Halleweyn, Nele Veerle Trees
Gertrudis et al
Arnold & Siedsma
Bezuidenhoutseweg 57
2594 AC The Hague (NL)**

(54) **ROBOT CLEANER AND ROBOT CLEANER CONTROL METHOD**

(57)    A robot cleaner and a method for controlling the same are disclosed. The robot cleaner includes: a main body; one or more infrared ray (IR) sensors configured to receive IR signals from a transmission device in various directions; a drive motor configured to move the main body toward the transmission device upon receiving a control signal from a controller; and a controller configured to remove reflected waves from among the plurality of IR signals by generating a transmission device direction estimation value, and control driving of the main body using the drive motor on the basis of the transmission device direction estimation value.

[Fig. 6]

EP 3 162 264 A1

**EP 3 162 264 A1**

## Description

[Technical Field]

Embodiments of the present disclosure relate to a robot cleaner and a method for controlling the same.

[Background Art]

Generally, a robot cleaner is an apparatus that automatically cleans a region to be cleaned (hereinafter referred to as a cleaning region) by suctioning impurities, such as dust, etc., from a floor while autonomously traveling about the cleaning region without user intervention. The robot cleaner may detect the distance to obstacles (e.g., furniture, walls, household appliances) located in the cleaning region through sensors, and may autonomously switch the traveling direction by selectively driving a left motor and a right motor.

In addition, the robot cleaner uses infrared light to receive a remote-controller control signal as well as to perform signaling of a charger (or a charging station). Most robot cleaners use one or more infrared ray (IR) sensors to receive signals from the remote-controller or the charger (or the charging station) in various technical fields. If the plurality of IR sensors is contained in the robot cleaner, the robot cleaner may measure the signal emission direction on the basis of the IR reception sensor. The measured emission direction may be considered very important when the robot cleaner returns to the charger position or when the robot cleaner desires to quickly recognize the control signal emission direction.

Meanwhile, since infrared light is reflected from walls, floors, or obstacles, the robot cleaner may sometimes receive reflected light.

[Disclosure]

[Technical Problem]

An object of the present disclosure is to provide a robot cleaner and a method for controlling the same, which can remove reflected waves abnormally received from among infrared ray (IR) signals received from a transmission device from a target object to be estimated during estimation of the direction of the transmission device, resulting in improved reliability in the transmission device direction.

[Technical Solution]

The objects of the present disclosure can be achieved by providing a robot cleaner including: a main body; one or more infrared ray (IR) sensors configured to receive IR signals from a transmission device in various directions; a drive motor configured to move the main body toward the transmission device upon receiving a control signal from a controller; and a controller configured to remove reflected waves from among the plurality of IR signals by generating a transmission device direction estimation value, and control driving of the main body using the drive motor on the basis of the transmission device direction estimation value.

The controller may include: a transmission device direction estimator configured to generate a system model estimation value regarding the direction of the transmission device using a Kalman filter, calculate an estimation sensor value on the basis of the system model estimation value and an observation model, correct the system model estimation value through a difference between the calculated estimation sensor value and a measurement sensor value, and calculate a transmission device direction estimation value; and a transmission device direction verifier configured to compare the transmission device direction estimation value with a predetermined reference value to perform verification.

The transmission device direction estimator may generate the system model estimation value regarding the transmission device direction using the following equation 1,

[Equation 1]

$$X_{k+1} = F_k X_k + W_k$$

where, $X_k$ is a transmission device direction at a specific time (k), $F_k$ is a state transition matrix for the Kalman filter, $W_k$ is a filter random noise, and $X_{k+1}$ is an estimation value of the transmission device direction at a specific time (k+1).

The transmission device direction estimator may estimate an observation model regarding the transmission device direction using the following equation 2,

[Equation 2]

$$Z_k = H_k X_k + V_k,$$

where, $Z_k$ is an estimation sensor value indicating an estimation value of a sensor value to be received by the IR sensor, $H_k$ is an output transition matrix, $X_k$ is a transmission device direction at a specific time (k), and $V_k$ is a noise of the IR sensor.

The transmission device direction estimator may calculate a difference between the estimated sensor value and a measurement sensor value received from the IR sensor during correction of the system model estimation value so as to calculates a Kalman gain, and may update a transmission device direction estimation value.

The transmission device direction estimator may estimate an error covariance of the transmission device direction using the Kalman filter.

The controller may further include: a reflected wave remover configured to remove the corresponding IR signal from a signal estimation target object when a difference between the transmission device direction estimation value verified by the transmission device direction verifier and one of the transmission device directions of the IR signal received from the IR sensor is higher than an allowable reference value.

If the transmission device is a charger, the controller may further include a drive controller for allowing the main body to move toward the transmission device on the basis of the transmission device direction estimation value filtered by the reflected wave remover.

If the transmission device is a remote controller, the controller may control driving of the main body on the basis of the IR signal of the transmission device direction estimation value filtered by the reflected wave remover.

The IR sensors may be arranged in the main body and are spaced apart from one another by a predetermined distance, such that positions of the respective IR sensors are identified.

The transmission device may be a charger or a remote controller.

In accordance with another aspect of the present disclosure, a method for controlling a robot cleaner includes: receiving infrared ray (IR) signals from a transmission device; generating a transmission device direction estimation value; verifying the generated transmission device direction estimation value; and removing reflected waves from among the IR signals received from the transmission device on the basis of the verified transmission device direction estimation value.

If the transmission device is a charger, after removing the reflected waves, the method may further include allowing a main body to return to the transmission device on the basis of the transmission device direction estimation value filtered by the reflected waves.

If the transmission device is a remote controller, after removing the reflected waves, the method may further controlling driving of the main body on the basis of the IR signal of the transmission device direction estimation value obtained by filtering of the reflected waves.

The generating the transmission device direction estimation value may include: generating a system model estimation value regarding the transmission device direction using a Kalman filter; calculating an estimation sensor value on the basis of the system model estimation value and an observation model; and correcting the system model estimation value through a difference between the calculated estimation sensor value and a measurement sensor value.

During correction of the system model estimation value, the method may further include calculating a difference between the estimated sensor value and a measurement sensor value received from the IR sensor so as to calculates a Kalman gain, and updating a transmission device direction estimation value.

During generating of the system model estimation value regarding the transmission device direction, the method may further include generating the system model estimation value regarding the transmission device direction using the following equation 1,

[Equation 1]

$$X_{k+1} = F_k X_k + W_k$$

where, $X_k$ is a transmission device direction at a specific time (k), $F_k$ is a state transition matrix for the Kalman filter, $W_k$ is a filter random noise, and $X_{k+1}$ is an estimation value of the transmission device direction at a specific time (k+1).

During generating of the system model estimation value regarding the transmission device direction, the method may further include estimating an observation model regarding the transmission device direction using the following equation 2,

[Equation 2]

$$Z_k = H_k X_k + V_k,$$

where, $Z_k$ is an estimation sensor value indicating an estimation value of a sensor value to be received by the IR sensor, $H_k$ is an output transition matrix, $X_k$ is a transmission device direction at a specific time (k), and $V_k$ is a noise of the IR sensor.

During generating of the transmission device direction estimation value, the method may further include estimating an error covariance of a charger direction using the Kalman filter.

During removing of the reflected waves from among the IR signals, the method may further include, if a difference between the transmission device direction of the received IR signal and the verified transmission device direction estimation value exceeds an allowable reference value, removing the corresponding IR signal from a signal estimation target object.

[Advantageous Effects]

As is apparent from the above description, the robot cleaner according to the embodiments can remove reflected waves abnormally received from among IR signals received from the transmission device from the target object to be estimated during estimation of the transmission device direction, such that reliability in the estimated direction of the transmission device and customer satisfaction of the manufactured products can be improved.

[Description of Drawings]

The accompanying drawings, which are included to provide a further understanding of the invention, illustrate embodiments of the invention and together with the description serve to explain the principle of the invention.

FIG. 1 is a plan view illustrating a robot cleaner according to an embodiment of the present disclosure.

FIGS. 2 and 3 are bottom perspective views illustrating the robot cleaner according to an embodiment of the present disclosure.

FIG. 4 is a bottom perspective view illustrating the robot cleaner according to another embodiment of the present disclosure.

FIG. 5 is a block diagram illustrating the robot cleaner according to an embodiment of the present disclosure.

FIG. 6 is a block diagram illustrating a controller shown in FIG. 5.

FIG. 7 is a flowchart illustrating a method for controlling the robot cleaner according to an embodiment of the present disclosure.

FIG. 8 is a flowchart illustrating some parts of constituent elements of FIG. 7.

FIG. 9 is a conceptual view illustrating an example in which IR sensors are mounted to the robot cleaner.

FIG. 10 is a conceptual view illustrating an example of signal communication between the robot cleaner and the charger signal region.

FIG. 11 is a conceptual view illustrating an example of signal communication between the remote-controller signal region and the robot cleaner.

FIG. 12 is a conceptual diagram illustrating an example of abnormal signal reception caused by reflected waves.

FIG. 13 is a conceptual diagram illustrating a method for controlling the robot cleaner according to an embodiment of the present disclosure.

[Best Mode]

Reference will now be made in detail to the embodiments of the present invention, examples of which are illustrated in the accompanying drawings, wherein like reference numerals refer to like elements throughout. Hereinafter, the above and other objects, specific advantages, and novel features of the present invention will become apparent from the following description of embodiments, given in conjunction with the accompanying drawings. Reference will now be made in detail to the embodiments of the present invention, examples of which are illustrated in the accompanying drawings. Wherever possible, the same reference numbers will be used throughout the drawings to refer to the same or like parts. In the following description, known functions or structures, which may confuse the substance of the present invention, are not explained. It will be understood that, although the terms first, second, etc. may be used herein to describe various elements, components, regions, and/or sections, these elements, components, regions, layers and/or sections should not be limited by these terms.

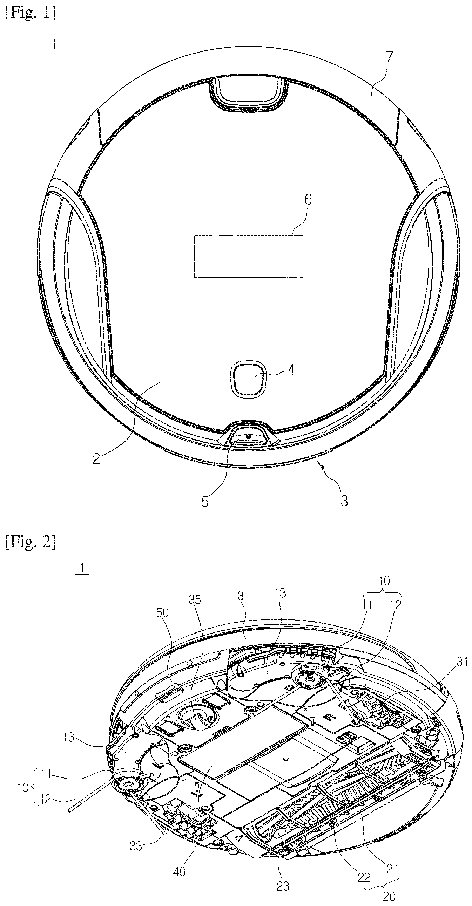

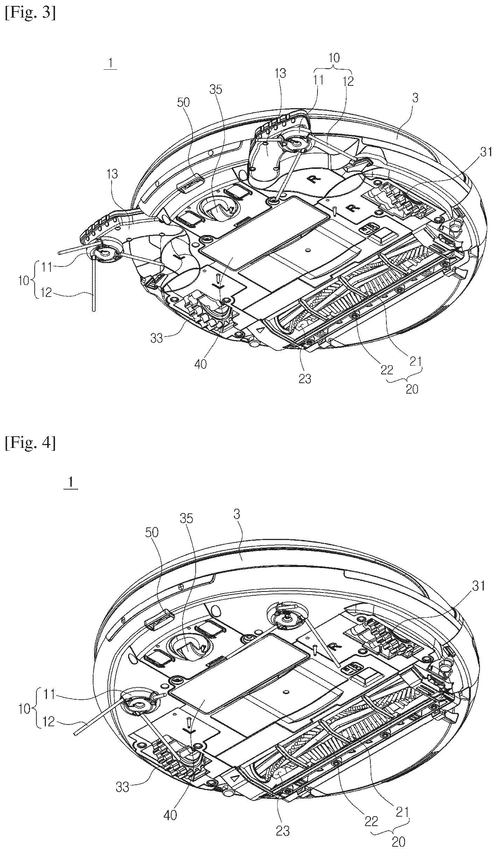

FIG. 1 is a plan view illustrating a robot cleaner according to an embodiment of the present disclosure. FIGS. 2 and 3 are bottom perspective views illustrating the robot cleaner according to an embodiment of the present disclosure. FIG. 4 is a bottom perspective view illustrating the robot cleaner according to another embodiment of the present disclosure.

Referring to FIGS. 1 to 4, the robot cleaner 1 may include a main body 2, a sensing part 3, a communication part 5, a display 6, a dust collector 7, brushes 10 and 20, drive wheels 31, 33 and 35, a power-supply part 40, and a fall detection part 50.

The sensing part 3 may detect obstacles present in the traveling route of the main body 2, and may be configured in the form of a proximity sensor capable of recognizing the distance to the obstacles. However, the scope or spirit of the sensing part 3 is not limited thereto. The robot cleaner 1 may further include a vision sensor 4 capable of recognizing the position to form a map needed for traveling of the robot cleaner 1.

The communication part 5 may allow the robot cleaner 1 to communicate with external devices, for example, a docking station (not shown), a virtual guard (not shown), etc. In this case, if the cleaning traveling mode of the robot cleaner 1 is completed or if the remaining battery charge is lower than a reference value, the main body 2 may dock with the docking station so that a power-supply voltage can be applied to the main body 2. In addition, the docking station may include a communication part to transmit/receive a docking signal to/from the main body 2 so as to induce docking of the main body 2. In addition, the virtual guard may function as a virtual wall needed to identify the traveling restriction region during traveling of the robot cleaner 1. In order to prevent the robot cleaner 1 from entering a specific region, the virtual guard may transmit the entry restriction signal to a communication passage between a current cleaning region and a specific region.

The display 6 may be formed to one side of the main body 2, and may display various states of the robot cleaner 1. For example, a battery charging state, information as to whether the dust collector 7 is fully filled with dust, and the cleaning traveling mode and the dormant mode of the robot cleaner 1, etc. may be displayed on the display 6.

The dust collector 7 may suction dust or impurities through the suction inlet 23 and the brushes 10 and 20.

The brushes 10 and 20 may include a side brush 10 and a main brush 20. The side brush 10 may extend the cleaning region through rotation thereof. The side brush 10 may be installed at both sides of the forward direction of the main body 2, and may rotate in a horizontal direction with respect to the bottom surface. The rotation direction of the side brush 10 and the installation position within the main body 2 are not limited thereto. In addition, the side brush 10 may include a rotation shaft 11 and a side brush 12. The side brush 10 may include a protrusion side brush and a fixed side brush. Referring to FIGS. 2 and 3, the protrusion side brush may allow the rotation shaft 11 and the side brush 12 to protrude from the main body 2 (See FIG. 3) through the side arm 13 mounted to the main body 2, or may allow the rotation shaft 11 and the side brush 12 to return (or move back) to the main body 2 through the side arm 13 mounted to the main body 2 (See FIG. 2). In addition, the fixed side brush may be fixed to the main body 2 because the side brush 12 is formed in the rotation shaft 11 mounted to the main body 2 as shown in FIG. 4.

The main brush 20 may be attached to the suction inlet 23 formed at the bottom surface of the main body 2. The main brush 20 may include a main brush 21 and a roller 22. The main brush 21 may be formed at the external surface of the roller 22. The main brush 21 may scatter dust accumulated on the floor according to rotation of the roller 22, such that the dust may be directed to the suction inlet 23. Here, the main brush 21 may be formed of all kinds of elastic materials.

The drive wheels 31, 33 and 35 may be formed at the left and right edges symmetrical to each other at the center region of the bottom surface of the main body 2, and may be formed in the forward region of the bottom surface of the main body 2. If necessary, the drive wheels 31, 33 and 35 may also be mounted to other regions. In this case, the drive wheels 31, 33 and 35 may move in various directions (e.g., forward movement, backward movement, rotation, etc.) during the cleaning traveling mode of the main body 2, and may receive movement force through the wheel motor (not shown). One drive wheel 35 from among the above-mentioned drive wheels may be formed in the forward region of the bottom surface of the main body 2, and may rotate according to the state of the bottom surface on which the main body 2 travels, such that the angle may be changed. The drive wheel 35 may be utilized for posture stabilization and fall prevention of the main body 2, may support the robot cleaner 1, and may be composed of a roller or caster wheel. In addition, the drive wheels 31, 33 and 35 may be modularized, and may be detachably mounted to the bottom surface of the main body 2 in a hook coupling, screw coupling, or interference fit manner.

The power-supply part 40 may provide a power-supply voltage to drive the main body 2. The power-supply part 40 may include a battery which is electrically coupled to the main body 2 and the drive processor needed to drive the main body and various constituent components mounted to the main body 2 so as to provide the main body 2 and the drive processor with driving power. In this case, the battery may be a secondary rechargeable battery. If the main body is coupled to the docking station (not shown) after completion of the cleaning traveling mode, the battery may be charged with electricity upon receiving the power-supply voltage from the docking station.

The fall detection part 50 may include a plurality of sensors (not shown) to prevent fall of the main body 2.

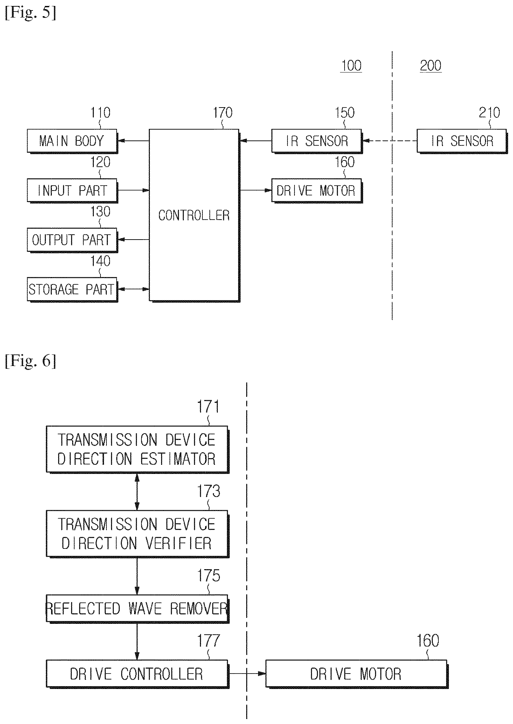

FIG. 5 is a block diagram illustrating the robot cleaner according to an embodiment of the present disclosure. FIG. 6 is a block diagram illustrating the controller shown in FIG. 5.

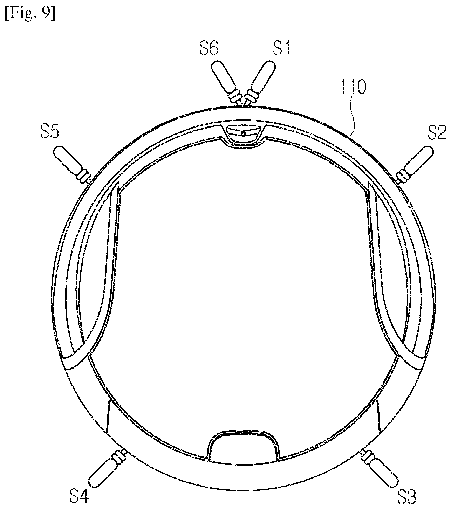

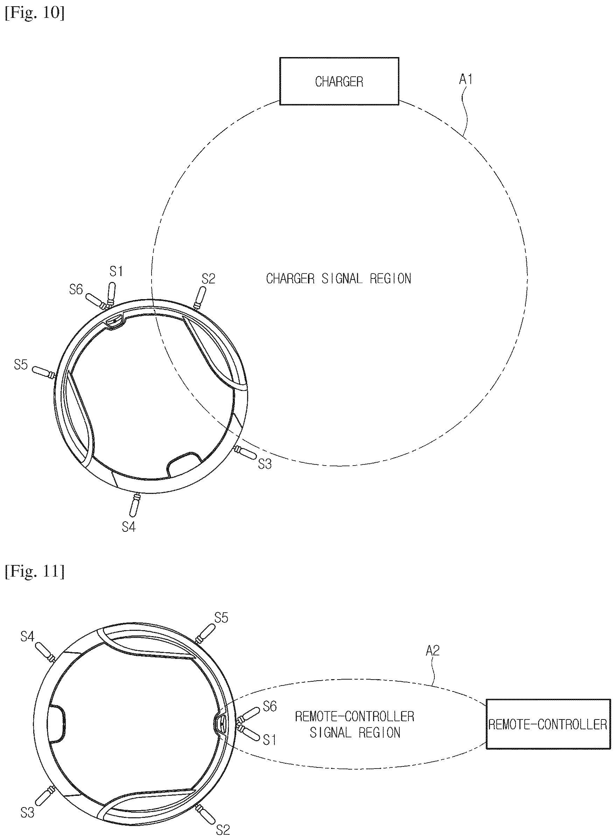

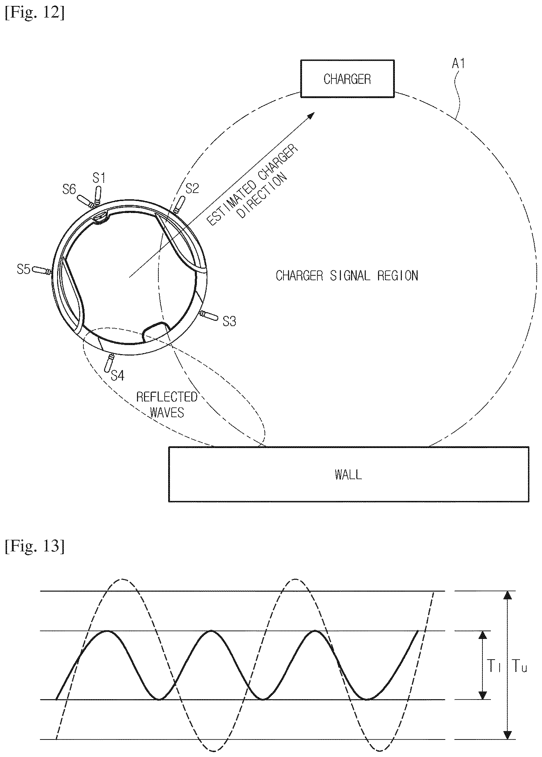

FIG. 9 is a conceptual view illustrating an example in which the IR sensors are mounted to the robot cleaner. FIG. 10 is a conceptual view illustrating an example of signal communication between the robot cleaner and the charger signal region. FIG. 11 is a conceptual view illustrating an example of signal communication between the remote-controller signal region and the robot cleaner. FIG. 12 is a conceptual diagram illustrating an example of abnormal signal reception caused by reflected waves. FIG. 13 is a conceptual diagram illustrating a method for controlling the robot cleaner.

Referring to FIG. 5, the robot cleaner 100 may include a main body 110, an input part 120, an output part 130, a storage part 140, an infrared ray (IR) sensor 150, a drive motor 160, and a controller 170.

In more detail, the input part 120 may be formed of any switch for sensing user's pressure, for example, a button switch, a membrane switch such as a film, a touch switch, or the like. The input part 120 is located in the main body 110 so that the user can freely manipulate the input part 120.

The output part 130 may output information regarding various operations carried out by the robot cleaner 100.

The storage part 140 may store information related to the robot cleaner 100. For example, the storage part 140 may store various kinds of references capable of removing reflected waves from among IR signals received from the IR sensor 150, drive control information of the main body 110, etc.

The IR sensor 150 may receive IR signals from various directions of the transmission device 200. In this case, the transmission device 200 may be a charger for charging the battery of the robot cleaner 100, or may be a remote controller for remote control of the robot cleaner 100. The transmission device 200 may include the IR sensor 210 to transmit the IR signal. If necessary, the IR sensors 150 and 210 may be replaced with other communication sensors for implementing short range communication between the robot cleaner 100 and the transmission device 200.

Referring to FIG. 9, the plurality of IR sensors 150 (e.g., S1, S2, S3, S4, S5, and S6) may be arranged in the main body 10, and may be spaced apart from one another by a predetermined distance so as to identify the position of the respective IR sensors 150. For example, as can be seen from FIG. 9, the IR sensors 150 may be arranged along the edge of the main body 110 at intervals of a predetermined distance. However, the scope or spirit of the IR sensors 150 is not limited thereto, and the IR sensors 150 may be mounted anywhere that the IR sensors 150 can receive IR signals from the transmission device 200. In addition, the number of the IR sensors 150 is not limited to the number of IR sensors shown in FIG. 9, and may be changeable according to necessity of the operator or administrator.

The drive motor 160 may be configured to travel the main body 110 of the robot cleaner 100. The drive motor 160 may move the main body 110 toward the transmission device 200 upon receiving a control signal from the controller 170.

The controller 170 may generate a direction estimation value of the transmission device, may remove reflected waves from among the IR signals using the direction estimated value, and may control driving of the main body 110 using the drive motor 160 on the basis of the direction estimation value of the transmission device.

Referring to FIGS. 10 and 11, the charger or the remote controller may communicate with the robot cleaner 100 according to near field communication (NFC), and may transmit the IR signal to the robot cleaner 100, such that the corresponding IR sensor 150 of the robot cleaner 100 located in the signal regions A1 and A2 may receive the IR signals. For example, the IR sensor S2 of FIG. 10 and the IR sensors S1 and S6 of FIG. 11 may receive the IR signals from the charger or the remote controller. As can be seen from FIG. 12, the robot cleaner 100 may estimate the charger direction on the basis of the received IR signals, such that the robot cleaner 100 may return to the charger.

On the other hand, as shown in FIG. 12, the IR sensors of the robot cleaner 100 may receive normal IR signals (e.g., S2 and S3), or may receive abnormal IR signals (e.g., S4) such as reflected waves caused by obstacles such as the wall. The abnormal IR signal can reduce reliability of the resultant value needed to estimate the direction of the transmission device 200, such that the controller 170 may exclude the abnormal IR signal from the target object to be estimated during estimation of the transmission device direction, and as such a detailed description thereof will be given below.

Referring to FIG. 6, the controller 170 may include a transmission device direction estimator 171, a transmission device direction verifier 173, a reflected wave remover 175, and a drive controller 177.

The transmission device direction estimator 171 may generate a system model estimation value regarding the direction of the transmission device 200 using the Kalman filter, may calculate an estimation sensor value on the basis of the system model estimation value and an observation model, and may correct the system model estimation value on the basis of a difference between the calculated estimation sensor value and the measurement sensor value, such that the transmission device direction estimator 171 may calculate the transmission device direction estimation value. In this case, the Kalman filter may be a recursive filter applicable to all linear systems including a time variation system, a non-stationary system, and a multi-channel system. In the present disclosure, the Kalman filter may be used to estimate signal sources.

The above-mentioned system model estimation value may be a prediction (or estimation) model needed to estimate the next state through the system model without using the actually received measurement value. In addition, the estimated sensor value may be used to estimate the IR sensor values to be measured by the IR sensors 150 using the system model estimation value and the observation model. The estimated sensor value is not the actual sensor value, but is a predicted (or estimated) value caused by the model. The estimation sensor value may be different from the measurement sensor value obtained through actual measurement.

The transmission device direction estimator 171 may generate the system model estimation value of the transmission device direction, as represented by following equation 1.

[Equation 1]

$$X_{k+1} = F_k X_k + W_k$$

In Equation 1, $X_k$ is a state to be estimated, and may denote the transmission device direction at a specific time (k). $F_k$ is a state transition matrix for the Kalman filter, and may be exemplarily set to 1 according to the present disclosure. $W_k$ is a filter random noise. $X_{k+1}$ is an estimation value of the transmission device direction at a specific time (k+1). Here, $W_k$ (filter random noise) is used to receive the IR signals regarding various directions. When the transmission device direction estimation value is established, $W_k$ may prevent the transmission device direction estimation value from being affected by only one direction.

In addition, the transmission device direction estimator 171 may estimate the observation model regarding the transmission device direction, as represented by the following equation 2. In this case, the observation model may be used to correct the system model estimation value.

[Equation 2]

$$Z_k = H_k X_k + V_k$$

In Equation 2, $Z_k$ is an estimation sensor value indicating an estimation value of the sensor value to be received by the IR sensors 150, and $H_k$ is an output transition matrix. $X_k$ is a value estimated by the system model, and may denote the transmission device direction at the specific time (k), and $V_k$ is noise of the IR sensors 150. That is, $Z_k$ is obtained by estimating the estimation sensor value (Z) at a new value $X_k$ (i.e., $X_{k+1}$ of Equation 1) estimated by the system model using the observation model.

In addition, the transmission device direction estimator 171 may calculate a difference between the estimated sensor value and the measurement sensor value received from the IR sensor 150 during estimation of the system model estimation value, and may calculate the Kalman gain, and may update the transmission device direction estimation value at the specific time (k) on the basis of the calculated value. The transmission device direction estimator 171 may repeat the above-mentioned processes, and thus estimate a successive direction of the transmission device 200.

The transmission device direction estimator 171 may estimate the error covariance of the transmission device direction using the Kalman filter. In this case, the error covariance may indicate the error range of the transmission device direction value estimated by the Kalman filter. Assuming that the estimated transmission device direction value is largely changed every moment, if the error covariance is increased and is slightly changed, the error covariance is reduced.

The transmission device direction verifier 173 may compare the transmission device direction estimation value with a predetermined reference value, and thus perform verification.

In more detail, assuming that the error covariance of the Kalman filter does not exceed the reliable reference range ($T_1$), and a difference ($V_k = Z-Z_k$) between the measurement sensor value (Z) and the estimation sensor value ($Z_k$) is within "$\pm 2\sigma$", the transmission device direction verifier 173 may determine that the filter has normally estimated the transmission device direction. Assuming that the error covariance of the Kalman filter exceeds an initialization reference range ($T_u$) and the difference ($V_k = Z-Z_k$) between the measurement sensor value (Z) and the estimation sensor value ($Z_k$) exceeds "$\pm 2\sigma$", the transmission device direction verifier 173 may determine occurrence of failure in verification of the corresponding transmission device direction estimation value, and may transmit the determined result to the transmission device direction estimator 171, so that the transmission device direction verifier 173 may initialize the Kalman filter. In this case, the reliable reference range ($T_1$) and the initialization reference range ($T_u$) may establish the initialization reference range larger than the reliable reference range as shown in FIG. 13, the Kalman filter in which the transmission device direction estimation value exceeds the initialization reference range as shown in FIG. 13 is initialized, so that the above processing of the transmission device direction estimation value may resume and be repeated again as necessary.

The reflected wave remover 175 may remove the corresponding IR signal from the target object to be estimated, when the difference between the transmission device direction of the IR signal received from the IR sensor 150 and the verified direction estimation value of the transmission device is higher than a reference value.

If the transmission device 200 is the charger, the drive controller 177 may allow the main body 110 to return to the transmission device on the basis of the transmission device direction estimation value filtered by the reflected wave remover 175.

If the transmission device 200 is the remote controller, the drive controller 177 may control driving of the main body 110 on the basis of the IR signal of the transmission device direction estimation value filtered by the reflected wave remover 175.

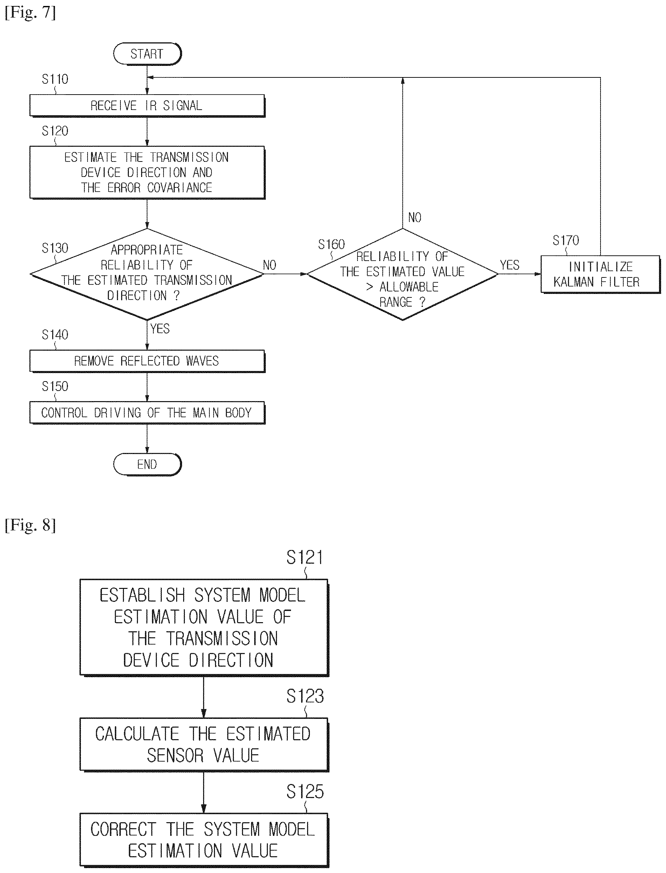

FIG. 7 is a flowchart illustrating a method for controlling the robot cleaner. FIG. 8 is a flowchart illustrating some parts of FIG. 7.

FIG. 9 is a conceptual view illustrating an example in which the IR sensors are mounted to the robot cleaner. FIG. 10 is a conceptual view illustrating an example of signal communication between the robot cleaner and the charger signal region. FIG. 11 is a conceptual view illustrating an example of signal communication between the remote-controller signal region and the robot cleaner. FIG. 12 is a conceptual diagram illustrating an example of abnormal signal reception caused by reflected waves. FIG. 13 is a conceptual diagram illustrating a method for controlling the robot cleaner.

Referring to FIG. 9, the robot cleaner 100 may receive IR signals from the transmission device 200 in operation S110. In this case, the transmission device 200 may be the charger for battery charging of the robot cleaner 100, or may be the remote controller for remote control. The transmission device 200 may include the IR sensor 210 for transmitting the IR signals.

The robot cleaner 100 may generate the transmission device direction estimation value in operation S120.

Referring to FIG. 8, the robot cleaner 100 may generate the system model estimation value regarding the direction of the transmission device 200 using the Kalman filter in operation S121.

The robot cleaner 100 may generate the system model estimation value regarding the transmission device direction using Equation 1 in operation S121.

In Equation 1, $X_k$ is a state to be estimated, and may denote the transmission device direction at a specific time (k). $F_k$ is a state transition matrix for the Kalman filter, and may be exemplarily set to 1 according to the present disclosure. $W_k$ is a filter random noise. $X_{k+1}$ is an estimation value of the transmission device direction at a specific time (k+1).

The robot cleaner 100 may calculate the estimation sensor value on the basis of the generated system model estimation value and the observation model in operation S123.

The robot cleaner 100 may estimate the observation model regarding the transmission device direction using Equation 2 in operation S123. In this case, the observation model may be used to correct the system model estimation value.

[Equation 2]

$$Z_k = H_k X_k + V_k$$

In Equation 2, $Z_k$ is an estimation sensor value indicating an estimation value of the sensor value to be received by the IR sensors 150, and $H_k$ is an output transition matrix. $X_k$ is a value estimated by the system model, and may denote the transmission device direction at the specific time (k), and $V_k$ is noise of the IR sensors 150. That is, $Z_k$ is obtained by estimating the estimation sensor value (Z) at a new value $X_k$ (i.e., $X_{k+1}$ of Equation 1) estimated by the system model using the observation model.

Thereafter, the robot cleaner 100 may correct the system model estimation value through a difference between the calculated estimation sensor value and the measurement sensor value in operation S125. In this case, when the system model estimation value is corrected, the robot cleaner 100 may calculate the difference between the estimation sensor value and the measurement sensor value received from the IR sensors, and may calculate the Kalman gain and may update the transmission device direction estimation value. The robot cleaner 100 may estimate a successive direction of the transmission device 200 by repeating the operations S121 to S125.

Meanwhile, the robot cleaner 100 may estimate the error covariance of the charger direction using the Kalman filter in operation S120. In this case, the error covariance may indicate the error range of the transmission device direction value estimated by the Kalman filter. Assuming that the estimated transmission device direction value is largely changed every moment, if the error covariance increases and is slightly changed, the error covariance is also reduced.

The robot cleaner 100 may verify the generated transmission device direction estimation value.

In more detail, if the error covariance of the Kalman filter does not exceed the reliable reference range ($T_1$), and if the difference ($V_k = Z-Z_k$) between the measurement sensor value (Z) and the estimation sensor value ($Z_k$) is within "$\pm 2\sigma$" in operation S130, the robot cleaner 100 may determine that the filter has normally estimated the transmission device direction.

Assuming that the error covariance of the Kalman filter exceeds an initialization reference range ($T_u$) and the difference ($V_k = Z-Z_k$) between the measurement sensor value (Z) and the estimation sensor value ($Z_k$) exceeds "$\pm 2\sigma$", the robot cleaner 100 may determine occurrence of failure in verification of the corresponding transmission device direction estimation value in operation S160, and may transmit the determined result to the transmission device direction estimator 171 so as to initialize the Kalman filter in operation S170. In this case, the reliable reference range ($T_1$) and the initialization reference range ($T_u$) may establish an initialization reference range larger than the reliable reference range as shown in FIG. 13, and the Kalman filter in which the transmission device direction estimation value exceeds the initialization reference range as shown in FIG. 13 is initialized, so that the above processing of the transmission device direction estimation value may resume and be repeated again as necessary.

The robot cleaner 100 may remove reflected waves from among the IR signals received from the transmission device 200 on the basis of the verified transmission device direction estimation value in operation S140.

If the difference between the transmission device direction of the received IR signals and the verified transmission device direction estimation value exceeds a reference value in operation S140, the robot cleaner 100 may remove the corresponding IR signals from the target object to be estimated.

If the transmission device 200 is the charger, the robot cleaner 100 may allow the main body 110 to return to the transmission device 200 on the basis of the transmission device direction estimation value obtained by filtering of the reflected waves. If the transmission device 200 is the remote controller, the robot cleaner 100 may control driving of the main body 110 on the basis of the IR signal of the transmission device direction estimation value obtained by filtering of the reflected waves in operation S150.

The robot cleaner 100 can correctly estimate the signal transmission direction by removing reflected waves caused by obstacles, such that there is a high possibility that the robot cleaner 100 returns to the position of the transmission device (e.g., the charger or the like), resulting in reduction of the return time.

Although the embodiments of the present invention have been disclosed for illustrative purposes, those skilled in the art will appreciate that various modifications, additions and substitutions are possible, without departing from the scope and spirit of the invention as disclosed in the accompanying claims.

**Claims**

1. A robot cleaner comprising:

   a main body;
   a infrared ray (IR) sensors configured to receive IR signals from a transmission device in various directions;
   a drive motor configured to move the main body toward the transmission device upon receiving a control signal from a controller; and
   a controller configured to remove reflected waves from among the plurality of IR signals by generating a transmission device direction estimation value, and control driving of the main body using the drive motor on the basis of the transmission device direction estimation value.

2. The robot cleaner according to claim 1, wherein the controller includes:

a transmission device direction estimator configured to generate a system model estimation value regarding the direction of the transmission device using a Kalman filter, calculate an estimation sensor value on the basis of the system model estimation value and an observation model, correct the system model estimation value through a difference between the calculated estimation sensor value and a measurement sensor value, and calculate a transmission device direction estimation value; and
a transmission device direction verifier configured to compare the transmission device direction estimation value with a predetermined reference value to perform verification.

3. The robot cleaner according to claim 2, wherein the transmission device direction estimator is configured to generate the system model estimation value regarding the transmission device direction using the following equation 1,

[Equation 1]

$$ X_{k+1} = F_k X_k + W_k $$

where, $X_k$ is a transmission device direction at a specific time (k), $F_k$ is a state transition matrix for the Kalman filter, $W_k$ is a filter random noise, and $X_{k+1}$ is an estimation value of the transmission device direction at a specific time (k+1).

4. The robot cleaner according to claim 3, wherein the transmission device direction estimator is configured to estimate an observation model regarding the transmission device direction using the following equation 2,

[Equation 2]

$$ Z_k = H_k X_k + V_k , $$

where, $Z_k$ is an estimation sensor value indicating an estimation value of a sensor value to be received by the IR sensor, $H_k$ is an output transition matrix, $X_k$ is a transmission device direction at a specific

time (k), and $V_k$ is a noise of the IR sensor.

5. The robot cleaner according to claim 4, wherein the transmission device direction estimator calculates a difference between the estimated sensor value and a measurement sensor value received from the IR sensor during correction of the system model estimation value so as to calculates a Kalman gain, and updates a transmission device direction estimation value.

6. The robot cleaner according to claim 2, wherein the transmission device direction estimator is configured to estimate an error covariance of the transmission device direction using the Kalman filter.

7. The robot cleaner according to claim 2, wherein the controller further includes:

a reflected wave remover configured to remove the corresponding IR signal from a signal estimation target object when a difference between the transmission device direction estimation value verified by the transmission device direction verifier and one of the transmission device directions of the IR signal received from the IR sensor is higher than an allowable reference value.

8. The robot cleaner according to claim 7, wherein:

if the transmission device is a charger, the controller further includes a drive controller for allowing the main body to move toward the transmission device on the basis of the transmission device direction estimation value filtered by the reflected wave remover.

9. The robot cleaner according to claim 7, wherein:

if the transmission device is a remote controller, the controller is configured to control driving of the main body on the basis of the IR signal of the transmission device direction estimation value filtered by the reflected wave remover.

10. The robot cleaner according to claim 1, wherein the IR sensors are arranged in the main body and are spaced apart from one another by a predetermined distance, such that positions of the respective IR sensors are identified.

11. The robot cleaner according to claim 1, wherein the transmission device is a charger or a remote controller.

12. A method for controlling a robot cleaner comprising:

receiving infrared ray (IR) signals from a transmission device;

generating a transmission device direction estimation value;

verifying the generated transmission device direction estimation value; and

removing reflected waves from among the IR signals received from the transmission device on the basis of the verified transmission device direction estimation value.

13. The method according to claim 12, further comprising:

if the transmission device is a charger, after removing the reflected waves, allowing a main body to return to the transmission device on the basis of the transmission device direction estimation value filtered by the reflected waves.

14. The method according to claim 12, wherein:

if the transmission device is a remote controller, after removing the reflected waves, controlling driving of the main body on the basis of the IR signal of the transmission device direction estimation value obtained by filtering of the reflected waves.

15. The method according to claim 12, wherein the generating the transmission device direction estimation value includes:

generating a system model estimation value regarding the transmission device direction using a Kalman filter;

calculating an estimation sensor value on the basis of the system model estimation value and an observation model; and

correcting the system model estimation value through a difference between the calculated estimation sensor value and a measurement sensor value.

16. The method according to claim 15, further comprising:

during correction of the system model estimation value, calculating a difference between the estimated sensor value and a measurement sensor value received from the IR sensor so as to calculates a Kalman gain, and updating a transmission device direction estimation value.

17. The method according to claim 15, further comprising:

during generating of the system model estimation value regarding the transmission device direction,

generating the system model estimation value regarding the transmission device direction using the following equation 1,

[Equation 1]

$$X_{k+1} = F_k X_k + W_k$$

where, $X_k$ is a transmission device direction at a specific time (k), $F_k$ is a state transition matrix for the Kalman filter, $W_k$ is a filter random noise, and $X_{k+1}$ is an estimation value of the transmission device direction at a specific time (k+1).

18. The method according to claim 15, further comprising:

during generating of the system model estimation value regarding the transmission device direction,

estimating an observation model regarding the transmission device direction using the following equation 2,

[Equation 2]

$$Z_k = H_k X_k + V_k,$$

where, $Z_k$ is an estimation sensor value indicating an estimation value of a sensor value to be received by the IR sensor, $H_k$ is an output transition matrix, $X_k$ is a transmission device direction at a specific time (k), and $V_k$ is a noise of the IR sensor.

19. The method according to claim 12, further comprising:

during generating of the transmission device direction estimation value, estimating an error covariance of a charger direction using the Kalman filter.

20. The method according to claim 12, further comprising:

during removing of the reflected waves from among the IR signals,

if a difference between the transmission device direction of the received IR signal and the verified transmission device direction estimation value exceeds an allowable reference value, re-

**EP 3 162 264 A1**

moving the corresponding IR signal from a signal estimation target object.

[Fig. 1]

[Fig. 2]

[Fig. 3]

[Fig. 4]

[Fig. 5]

110
MAIN BODY

120
INPUT PART

130
OUTPUT PART

140
STORAGE PART

170
CONTROLLER

150
IR SENSOR

160
DRIVE MOTOR

100

200

210
IR SENSOR

[Fig. 6]

171
TRANSMISSION DEVICE
DIRECTION ESTIMATOR

173
TRANSMISSION DEVICE
DIRECTION VERIFIER

175
REFLECTED WAVE REMOVER

177
DRIVE CONTROLLER

160
DRIVE MOTOR

[Fig. 7]

```
                          ( START )
                              │
  S110                        ▼
      ┌──────────────────────────────────────────┐
      │           RECEIVE IR SIGNAL               │
      └──────────────────────────────────────────┘
  S120                        │
      ┌──────────────────────────────────────────┐
      │       ESTIMATE THE TRANSMISSION           │
      │          DEVICE DIRECTION AND             │
      │          THE ERROR COVARIANCE             │
      └──────────────────────────────────────────┘
                              │
  S130                        ▼              NO
         ╱APPROPRIATE╲                 S160  ╱RELIABILITY OF ╲         S170 ┌──────────────┐
        ╱ RELIABILITY OF╲     NO          ╱ THE ESTIMATED VALUE╲  YES      │  INITIALIZE  │
       ╱ THE ESTIMATED TRANSMISSION╲──────▶╲   > ALLOWABLE     ╱──────────▶│ KALMAN FILTER│
        ╲   DIRECTION ?  ╱                  ╲    RANGE ?      ╱            └──────────────┘
         ╲             ╱                      ╲             ╱
              │ YES
  S140        ▼
      ┌──────────────────────────────────────────┐
      │          REMOVE REFLECTED WAVES           │
      └──────────────────────────────────────────┘
  S150        │
      ┌──────────────────────────────────────────┐
      │     CONTROL DRIVING OF THE MAIN BODY      │
      └──────────────────────────────────────────┘
                              │
                          ( END )
```

[Fig. 8]

```
                                    S121
      ┌──────────────────────────────────────────┐
      │        ESTABLISH SYSTEM MODEL             │
      │         ESTIMATION VALUE OF               │
      │           THE TRANSMISSION                │
      │           DEVICE DIRECTION                │
      └──────────────────────────────────────────┘
                         │
                                    S123
      ┌──────────────────────────────────────────┐
      │        CALCULATE THE ESTIMATED            │
      │            SENSOR VALUE                   │
      └──────────────────────────────────────────┘
                         │
                                    S125
      ┌──────────────────────────────────────────┐
      │       CORRECT THE SYSTEM MODEL            │
      │          ESTIMATION VALUE                 │
      └──────────────────────────────────────────┘
```

[Fig. 9]

[Fig. 10]

CHARGER

A1

CHARGER SIGNAL REGION

S1
S6
S2
S5
S3
S4

[Fig. 11]

S5
S4
A2
S6
S1
REMOTE-CONTROLLER
SIGNAL REGION
REMOTE-CONTROLLER
S3
S2

[Fig. 12]

[Fig. 13]

## INTERNATIONAL SEARCH REPORT

| International application No. |
|---|
| **PCT/KR2015/003108** |

**A. CLASSIFICATION OF SUBJECT MATTER**

*A47L 9/28(2006.01)i, G05D 1/02(2006.01)i, B25J 9/16(2006.01)i*

According to International Patent Classification (IPC) or to both national classification and IPC

**B. FIELDS SEARCHED**

Minimum documentation searched (classification system followed by classification symbols)
A47L 9/28; A47L 9/00; G05D 1/02; B25J 9/16; B25J 13/08

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: robot cleaner, IR sensor, drive motor, control unit, sending equipment, direction estimation value and reflected wave

**C. DOCUMENTS CONSIDERED TO BE RELEVANT**

| Category* | Citation of document, with indication, where appropriate, of the relevant passages | Relevant to claim No. |
|---|---|---|
| Y | KR 10-0645381 B1 (SAMSUNG GWANGJU ELECTRONICS CO., LTD.) 14 November 2006 See pages 3, 5-7, claim 1 and figures 2-5b. | 1,10-14,19-20 |
| A | | 2-9,15-18 |
| Y | KR 10-2010-0135904 A (SAMSUNG ELECTRONICS CO., LTD.) 29 December 2010 See paragraphs [0031], [0057], [0072] and figures 5-6, 9a-9b. | 1,10-14,19-20 |
| Y | KR 10-2007-0108815 A (SAMSUNG ELECTRONICS CO., LTD.) 13 November 2007 See paragraphs [0036], [0072] and figures 1, 9. | 19 |
| A | KR 10-2005-0099189 A (DAEWOO ELECTRONICS CORPORATION) 13 October 2005 See abstract and claim 1. | 1-20 |
| A | WO 2013-182941 A1 (KONINKLIJKE PHILIPS N.V.) 12 December 2013 See claim 1 and figures 1A-2. | 1-20 |

| ☐ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 20 JULY 2015 (20.07.2015) | **21 JULY 2015 (21.07.2015)** |

| Name and mailing address of the ISA/**KR** | Authorized officer |
|---|---|
| Korean Intellectual Property Office Government Complex-Daejeon, 189 Seonsa-ro, Daejeon 302-701, Republic of Korea | |
| Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2015/003108**

| Patent document cited in search report | Publication date | Patent family member | Publication date |
|---|---|---|---|
| KR 10-0645381 B1 | 14/11/2006 | EP 1760564 A2 | 07/03/2007 |
| | | EP 1760564 A3 | 19/08/2009 |
| | | JP 2007-066292 A | 15/03/2007 |
| | | JP 4171753 B2 | 29/10/2008 |
| | | US 2007-0050086 A1 | 01/03/2007 |
| | | US 7729803 B2 | 01/06/2010 |
| KR 10-2010-0136904 A | 29/12/2010 | CN 101926629 A | 29/12/2010 |
| | | CN 101926629 B | 07/01/2015 |
| | | CN 101926631 A | 29/12/2010 |
| | | CN 101926631 B | 11/02/2015 |
| | | CN 101972129 A | 16/02/2011 |
| | | CN 101972129 B | 04/02/2015 |
| | | CN 103948353 A | 30/07/2014 |
| | | CN 103948358 A | 30/07/2014 |
| | | EP 2263506 A2 | 22/12/2010 |
| | | EP 2263506 A3 | 04/12/2013 |
| | | EP 2263510 A2 | 22/12/2010 |
| | | EP 2263510 A3 | 10/12/2014 |
| | | EP 2290490 A1 | 02/03/2011 |
| | | EP 2290490 B1 | 07/08/2013 |
| | | EP 2312411 A1 | 20/04/2011 |
| | | EP 2312411 B1 | 28/08/2013 |
| | | EP 2312412 A1 | 20/04/2011 |
| | | EP 2312412 B1 | 28/08/2013 |
| | | EP 2650745 A1 | 16/10/2013 |
| | | EP 2662742 A1 | 13/11/2013 |
| | | EP 2672355 A1 | 11/12/2013 |
| | | EP 2672356 A1 | 11/12/2013 |
| | | KR 10-1412143 B1 | 27/06/2014 |
| | | KR 10-1473870 B1 | 18/12/2014 |
| | | US 2010-0324734 A1 | 23/12/2010 |
| | | US 2010-0324736 A1 | 23/12/2010 |
| | | US 2011-0010873 A1 | 20/01/2011 |
| | | US 2011-0236026 A1 | 29/09/2011 |
| | | US 2011-0238214 A1 | 29/09/2011 |
| | | US 2013-0227801 A1 | 05/09/2013 |
| | | US 8224487 B2 | 17/07/2012 |
| | | US 8438694 B2 | 14/05/2013 |
| | | US 8560119 B2 | 15/10/2013 |
| | | US 8650703 B2 | 18/02/2014 |
| KR 10-2007-0108815 A | 13/11/2007 | KR 10-1339449 B1 | 06/12/2013 |
| KR 10-2005-0099189 A | 13/10/2005 | NONE | |
| WO 2013-182941 A1 | 12/12/2013 | CN 104395849 A | 04/03/2015 |
| | | EP 2859423 A1 | 15/04/2015 |
| | | US 2015-0134144 A1 | 14/05/2015 |

Form PCT/ISA/210 (patent family annex) (July 2009)